# EUROPEAN PATENT SPECIFICATION

(11) **EP 3 994 972 B1**
(45) Date of publication and mention of the grant of the patent: **15.10.2025**
(21) Application number: 20834258.4
(22) Date of filing: 03.07.2020
(51) Int. Cl.: A01D 34/78, A01D 34/82, B60L 3/00, B60L 50/60, B60L 50/64, B60L 53/80, H01M 50/207, H01M 50/244, H01M 50/247, H01M 50/264, H01M 50/296

(54) **ELECTRIC LAWN MOWER**
ELEKTRISCHER RASENMÄHER
TONDEUSE À GAZON ÉLECTRIQUE

(30) Priority: 03.07.2019 CN 201910593524
(43) Date of publication of application: 11.05.2022
(73) Proprietor: Positec Power Tools (Suzhou) Co., Ltd., Suzhou, Jiangsu 215123 (CN)
(72) Inventor: QIAO, Yong, Suzhou, Jiangsu 215123 (CN)
(74) Representative: Kilburn & Strode LLP
(86) International application number: PCT/CN2020/100174
(87) International publication number: WO 2021/000947

(56) References cited:
- WO-A1-2018/101091
- CN-A- 105 432 212
- CN-A- 109 698 293
- CN-U- 206 509 986
- CN-U- 207 083 476
- CN-U- 207 083 476
- JP-A- 2007 300 808
- JP-B2- 4 860 341
- US-A1- 2018 131 058
- US-A1- 2018 301 773

## Description

### CROSS-REFERENCE TO RELATED APPLICATIONS

This application claims priority to Chinese Patent Application No. 201910593524.9, filed on July 3, 2019.

### BACKGROUND

### Technical Field

The present invention relates to an electric lawn mower, an electric wheeled vehicle, a battery device, and an electric tool.

### Related Art

With the continuous development of electric lawn mower industries, electric lawn mowers tend to cordless and portable. Thanks to the rapid development of battery technologies and computer technologies, generally, a battery pack is electrically connected to the electric lawn mower, so that the battery pack supplies electric power to the electric lawn mower without a power cable. However, a manner of supplying power to the electric lawn mower by using the battery pack has the following defects: a usage time is limited by a capacity of the battery pack. A future trend is to improve a voltage of the battery pack and adopt a solution that double battery packs or a plurality of battery packs are disposed in parallel for extending the usage time of the electric lawn mower.

However, a safety regulation needs to be considered when the solution that double battery packs or a plurality of battery packs are designed in parallel is adopted and the voltage of the battery pack exceeds a safe voltage. Specifically, when only one battery pack needs to be inserted into the electric lawn mower, electrode sheets in another battery pack mounting base are therefore electrified. However, the electrode sheet is often exposed and disposed in the battery pack mounting base, and the electrified electrode sheet extremely easily causes dangerous accidents such as electric shock.

WO2018101091 discloses an electric mower, the electric mower comprising a body having a battery housing recessed section that opens upward on an upper side and a battery 20 housed in the battery housing recessed section.

### SUMMARY

In view of this, an embodiment of the present invention provides an electric lawn mower, which can better resolve the above problem.

To achieve the foregoing objectives, the present invention provides the following technical solutions.

An electric lawn mower, capable of being detachably connected to at least two battery packs, wherein the electric lawn mower comprises:
a body;
a rotatable cutting element, disposed on the body;
a driving assembly, disposed on the body and configured to drive the cutting element to operate to perform a working task;
a battery pack accommodating cavity, provided on the body and provided with a battery cover capable of being opened or closed, wherein the battery pack accommodating cavity is configured for insertion of the battery pack to provide electric energy to the driving assembly, and the battery pack accommodating cavity is provided with conductive electrode sheets protruding from a surface of the battery pack accommodating cavity and configured for insertion and engagement with the at least two battery packs, wherein
each of the at least two battery packs comprises: a housing, and a circuit assembly accommodated in the housing, and a battery core assembly configured to perform charging and discharging; the circuit assembly comprises a connection terminal electrically connected to the battery core assembly, and the housing is provided with a power supply port for insertion of the conductive electrode sheet to be electrically connected to the connection terminal; and
the circuit assembly is configured to electrically connect the battery pack mounted in the battery pack accommodating cavity and the driving assembly, and when a conductive electrode sheet in the battery pack accommodating cavity is connected to one battery pack of the at least two battery packs and another battery pack of the at least two battery packs is not connected to a conductive electrode sheet so that there is a conductive electrode sheet in an unconnected state, the conductive electrode sheet in an unconnected state is electrified;
a shielding mechanism, disposed in the battery pack accommodating cavity and being movable relative to the conductive electrode sheet, wherein the shielding mechanism has a protection state of shielding the conductive electrode sheet and a working state of releasing shielding of the conductive electrode sheet to expose the conductive electrode sheet for insertion and engagement with the power supply port; and
an elastic member, configured to apply a restoring force to the shielding mechanism, to provide the shielding mechanism with a tendency of moving toward the protection state or maintaining the protection state.

Preferably, the shielding mechanism is provided with an opening corresponding to the conductive electrode sheet; when the shielding mechanism is in the protection state, the conductive electrode sheet is accommodated in the shielding mechanism; and when the shielding mechanism is in the working state, the conductive electrode sheet is electrically connected to the battery pack through the opening.

Preferably, a plurality of conductive electrode sheets disposed in the battery pack accommodating cavity are fixed on an electrode holder, a support member is disposed between an inner wall of the battery pack accommodating cavity and the electrode holder, a displacement direction of the shielding mechanism is consistent with an insertion direction of the battery pack, and in the insertion direction of the battery pack, one end of the elastic member forward abuts against the support member and the other end backward abuts against the shielding mechanism.

Preferably, the support member and the body are configured to be made of different materials, and the support member is configured to be made of a flame retardant material.

Preferably, the support member is provided with a guiding portion for guiding movement of the shielding mechanism.

Preferably, a surface of the support member facing away from the inner wall of the battery pack accommodating cavity protrudes outward to form the guiding portion, and the electrode holder is disposed on the guiding portion; and the guiding portion and the electrode holder are both spaced apart from the inner wall of the battery pack accommodating cavity to define guiding ring cavities, and end portions of the shielding mechanism are movably inserted into the guiding ring cavities.

Preferably, when the shielding mechanism is in the protection state, an initial elastic force applied by the elastic member to the shielding mechanism is between 20 N and 40 N.

Preferably, when the shielding mechanism is in the working state, the elastic member deforms and is compressed to store energy, so that a reaction elastic force applied to the shielding mechanism is not less than a sum of a weight of the battery pack and a weight of the shielding mechanism.

Preferably, the shielding mechanism is movable relative to the conductive electrode sheet in a direction perpendicular to an insertion direction of the battery pack; or the shielding mechanism is rotatable relative to the conductive electrode sheet in a direction perpendicular to an insertion direction of the battery pack.

Preferably, the shielding mechanism includes an abutting portion for abutting against the battery pack when the battery pack is inserted.

Preferably, the elastic member deforms in an insertion direction of the battery pack; and in the insertion direction of the battery pack, the shielding mechanism is located, under an action force of the elastic member, at a position where the conductive electrode sheet is shielded.

Preferably, the electric tool further includes an elastic mechanism, and the shielding mechanism further includes a trigger block connected to the elastic mechanism and abutting against the shielding plate to prevent the shielding plate from moving downward.

Preferably, the shielding plate includes a first shielding plate connected to the elastic member and a second shielding plate disposed perpendicular to the first shielding plate, where the second shielding plate is provided with a second opening for the trigger block to abut against the first shielding plate.

Preferably, a part of the trigger block passing through the second opening is provided with a slope surface, and the slope surface inclines from top to bottom in a height direction of the battery pack accommodating cavity.

Preferably, the elastic member deforms in a direction perpendicular to the insertion direction of the battery pack; and in the direction perpendicular in the insertion direction of the battery pack, the shielding mechanism is located on an outer side of the conductive electrode sheet under the action force of the elastic member.

Preferably, the shielding mechanism includes a shielding plate connected to the elastic member, where the shielding plate includes an accommodating portion configured to accommodate the conductive electrode sheet, the accommodating portion is recessed inward from the bottom of the shielding plate, and the shielding plate further includes a notch facing away from the elastic member and communicating with the accommodating portion; and the shielding plate moves, so that the conductive electrode sheet is exposed through the notch.

Preferably, the shielding mechanism is rotatable relative to the conductive electrode sheet.

Preferably, the shielding mechanism includes a shielding plate rotatably connected to the battery pack accommodating cavity by a rotating shaft.

By means of the above embodiments, a shielding mechanism that is movable relative to a conductive electrode sheet is disposed, the shielding mechanism shields the conductive electrode sheet under the action of an elastic member on the shielding mechanism when a battery pack is not inserted into a corresponding battery pack accommodating cavity, to avoid the electric shock accident caused by accidental touch of the conductive electrode sheet, thereby improving the safety performance of the electric lawn mower.

### BRIEF DESCRIPTION OF THE DRAWINGS

FIG. 1 is a side cross-sectional view of an electric lawn mower according to an embodiment of the present invention.
FIG. 2 is a side cross-sectional view of the electric lawn mower without a push rod and an operation handle shown in FIG. 1.
FIG. 3 is a schematic structural diagram in which double battery packs are connected in parallel.
FIG. 4 is a schematic structural diagram of assembling between a shielding mechanism and an electrode sheet according to a first non-restrictive embodiment of the present invention.
FIG. 5 is a local top view of an electric lawn mower including the shielding mechanism shown in FIG. 4.
FIG. 6 is a schematic structural diagram of assembling between a shielding mechanism and an electrode sheet according to a second non-restrictive embodiment of the present invention.
FIG. 7 is a schematic structural diagram of an electric lawn mower including the shielding mechanism shown in FIG. 6 and the shielding mechanism being in a protection state.
FIG. 8 is a schematic structural diagram of an electric lawn mower including the shielding mechanism shown in FIG. 6 and the shielding mechanism being in a working state.
FIG. 9 is a schematic structural diagram of assembling between a shielding mechanism and an electrode sheet according to a third non-restrictive embodiment of the present invention.
FIG. 10 is a schematic structural diagram of an electric lawn mower including the shielding mechanism shown in FIG. 9 and the shielding mechanism being in a protection state.
FIG. 11 is a schematic structural diagram of an electric lawn mower including the shielding mechanism shown in FIG. 9 and the shielding mechanism being in a working state.
FIG. 12 is a schematic structural diagram of assembling between the shielding mechanism in the protection state shown in FIG. 9 and a battery pack.
FIG. 13 is a schematic structural diagram of assembling between the shielding mechanism in the working state shown in FIG. 9 and a battery pack.
FIG. 14 is a schematic diagram of a process of switching the shielding mechanism shown in FIG. 9 from the protection state shown in FIG. 12 to the working state shown in FIG. 13.
FIG. 15 is a schematic three-dimensional structural diagram of the electric lawn mower shown in FIG. 1.
FIG. 16 is a front three-dimensional exploded view of assembling between a shielding mechanism and a battery pack, an electrode, an electrode holder as well as an elastic member according to a fourth non-restrictive embodiment of the present invention.
FIG. 17 is a back three-dimensional exploded view of assembling between the shielding mechanism shown in FIG. 16 and a battery pack, an electrode, an electrode holder as well as an elastic member.
FIG. 18 is a schematic three-dimensional structural diagram of a body including the shielding mechanism shown in FIG. 16.
FIG. 19 is a top view of FIG. 18;
FIG. 20 is a schematic structural diagram in which the shielding mechanism in the body shown in FIG. 18 or FIG. 19 is in a protection state.
FIG. 21 is a schematic structural diagram in which the shielding mechanism in the body shown in FIG. 18 or FIG. 19 is in a working state.
FIG. 22 is a schematic structural diagram in which a battery pack is inserted into a battery pack accommodating cavity and a battery cover is closed.
FIG. 23 is a schematic structural diagram in which a battery pack is moved out of a battery pack accommodating cavity and a battery cover is opened.
FIG. 24 is a schematic structural diagram of assembling between the shielding mechanism in the protection state shown in FIG. 16 or FIG. 17 and a battery pack, an electrode, an electrode holder, an elastic member as well as a support member.
FIG. 25 is a top view of FIG. 24 after the battery pack is removed.
FIG. 26 is a schematic structural diagram of assembling between the shielding mechanism in the working state shown in FIG. 16 or FIG. 17 and a battery pack, an electrode, an electrode holder, an elastic member as well as a support member.
FIG. 27 is a top view of FIG. 26 after the battery pack is removed.

### DETAILED DESCRIPTION

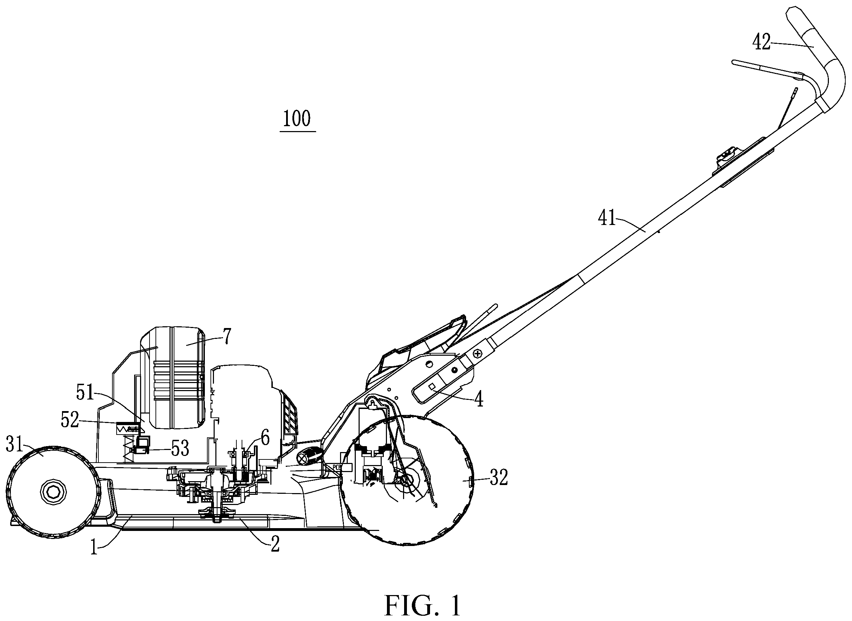

Referring to FIG. 1, FIG. 2, and FIG. 15, an electric lawn mower 100 according to an embodiment of the present invention includes a body 1, a cutting element 2 disposed on the body 1, and a driving assembly 6 disposed in the body 1 and configured to drive the cutting element 2 to operate to perform a mowing task. The cutting element 2 is a cutter head and includes a cutter head body and a plurality of blades pivotally connected to the cutter head body. Certainly, the cutting element 2 may alternatively be in another form such as a separate strip-shaped blade. This is not limited in this embodiment. A walking module is disposed at the bottom of the body 1 and includes a front wheel 31 and a rear wheel 32 respectively disposed at a front end and a rear end of the bottom of the body 1. The cutting element 2 is disposed at the bottom of the body 1, so that the walking module performs a working task when driving the electric lawn mower 100 to move.

The electric lawn mower 100 further includes a push rod base 4 disposed on the body 1 and a push rod 41 connected to the push rod base 4. An operation handle 42 is disposed on the push rod 41 for a user to use. The operation handle 42 is disposed on an end portion of the push rod 41 and is perpendicular to the push rod 41 for an operator to grip. Certainly, in another embodiment, the operation handle 42 may alternatively be disposed at another position of the push rod 41 and an angle between the operation handle and the push rod may be an obtuse angle or an acute angle. This is not specifically limited herein. In this way, the user holds the operation handle 42 and applies force to push the electric lawn mower 100 to travel and perform mowing.

The driving assembly 6 includes a motor (not shown). The motor is connected to the cutter head to drive the cutter head to rotate to perform a mowing action. The motor is provided with an output shaft (not shown). In some feasible embodiments, the motor is directly connected to the cutter head by the output shaft and drives the cutter head. Certainly, in some other feasible embodiments, the motor may indirectly transmit power to the cutter head by using a transmission device, so that the cutter head rotates. The transmission device includes a belt pulley, a reduction gear, and the like.

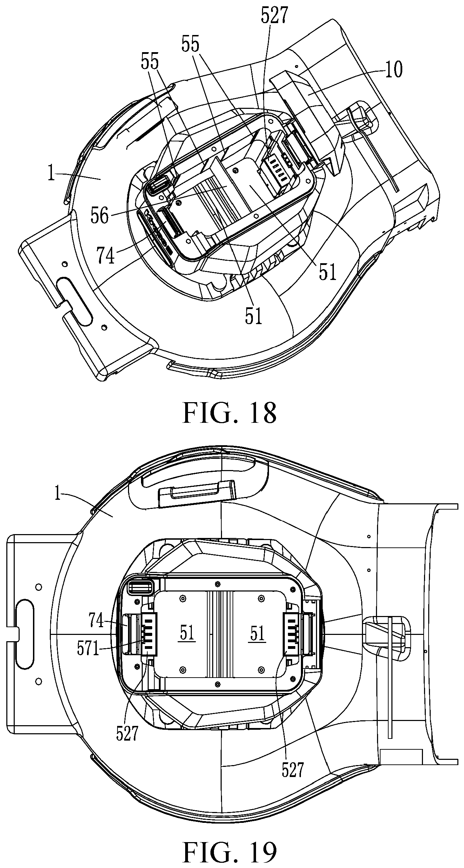

Referring to FIG. 18 and FIG. 20 to FIG. 23, the electric lawn mower 100 further includes a battery pack accommodating cavity 51 provided on the body 1 and configured to be connected to a battery pack 7 by insertion, so that the battery pack 7 supplies power to the driving assembly 6. A conductive electrode sheet 53 protruding from a surface of the battery pack accommodating cavity and configured for insertion and engagement with the battery pack 7 is disposed in the battery pack accommodating cavity 51, and the conductive electrode sheet 53 is connected to the driving assembly 6. In this way, after the battery pack 7 is inserted into the battery pack accommodating cavity 51 and the conductive electrode sheet 53 is configured for insertion and engagement with the battery pack 7, the battery pack 7 can supply electric energy required for work of the driving assembly 6.

The battery pack accommodating cavity 51 is recessed downward from an upper surface of the body 1, to facilitate installation and removal of the battery pack 7. There may be one battery pack accommodating cavity 51, and the battery pack accommodating cavity 51 can accommodate at least two battery packs 7 at the same time. Alternatively, with reference to FIG. 18, there may be at least two battery pack accommodating cavities 51, for example, two, three, or more battery pack accommodating cavities, and the at least two battery pack accommodating cavities 51 are provided in parallel. In addition, the at least two battery pack accommodating cavities 51 may be formed by partitioning an intact groove recessed downward from the upper surface of the body 1 by at least one partitioning plate 56. In this embodiment, each battery pack accommodating cavity 51 accommodates only one battery pack 7.

This specification is described by using two battery pack accommodating cavities 51 and two battery packs 7 as a main scenario. However, it can be learned based on the foregoing description that the protection scope of the embodiments of the present invention is not limited thereto.

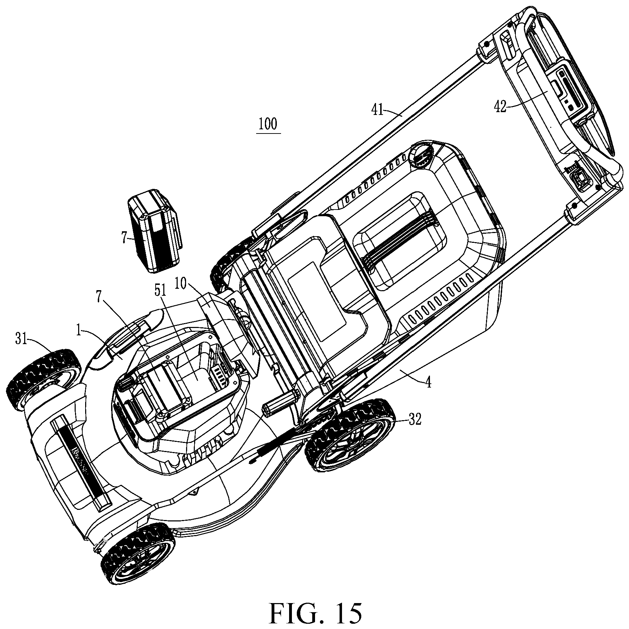

Referring to FIG. 15, FIG. 18, FIG. 22, and FIG. 23, the body 1 is rotatably provided with a battery cover 10 capable of opening or closing the battery pack accommodating cavity 51, to protect the battery pack 7 inserted into the battery pack accommodating cavity 51, thereby preventing crushed grass or external matters from entering the battery pack accommodating cavity 51 when the lawn mower performs a mowing task, which affects the stability of power supply of the battery pack 7 to the lawn mower.

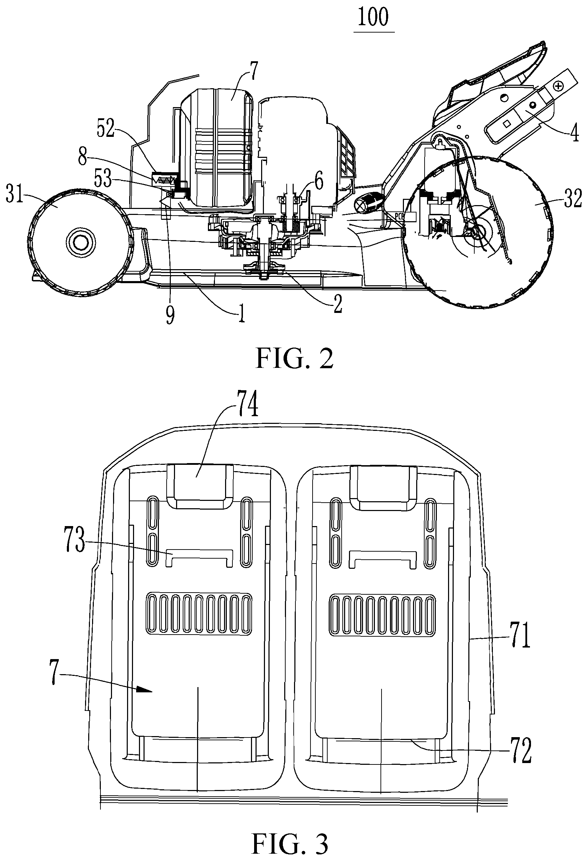

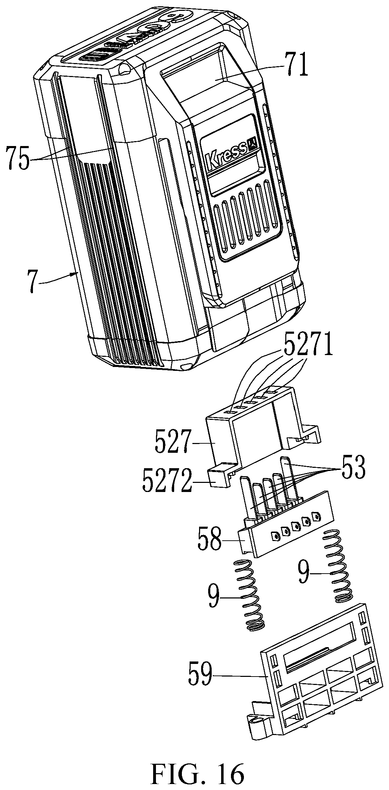

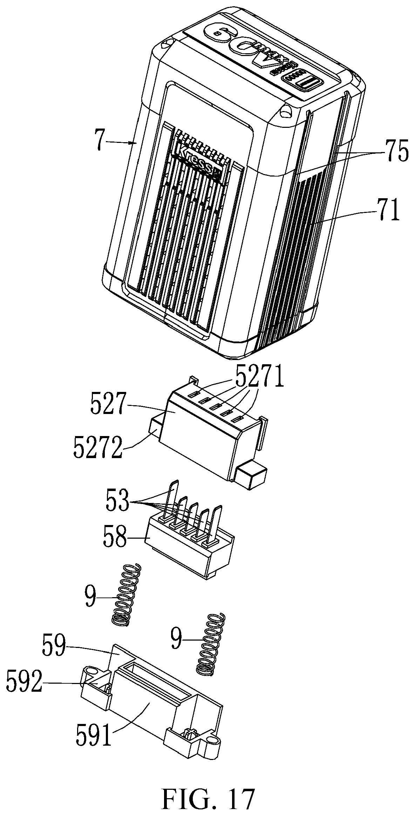

The battery pack 7 may be constructed in parallel arrangement of dual-pack or multi-pack according to actual requirements in combination with a quantity of battery pack accommodating cavities 51. FIG. 3 is a schematic structural diagram in which a dual-pack parallel design is used for the battery pack 7. The battery pack 7 includes a housing 71. With reference to FIG. 16 and FIG. 17, first slide rails 75 for guiding and limiting the insertion or removal of the battery pack into or from the battery pack accommodating cavity 51 are disposed on the housing 71, the first slide rails 75 are disposed on a left side and a right side of the housing 71, and at least one first slide rail 75 is disposed on a single side of the housing 71. The first slide rail 75 is of a long-strip-shaped groove structure extending in a straight line, and a specific extending direction of the first slide rail is consistent with an insertion and moving direction of the battery pack 7. In this embodiment, when the battery pack accommodating cavity 51 is of a groove-shaped structure with an upper opening, the battery pack 7 is inserted into or moved out of the battery pack accommodating cavity 51 in a vertical direction, and the first slide rail 75 correspondingly extends in the vertical direction.

With reference to FIG. 18, second slide rails 55 corresponding to the first slide rails 75 are disposed inside the battery pack accommodating cavity 51. The second slide rail 55 is of a protrusion or convex rib structure protruding outward from an inner wall of the battery pack accommodating cavity 51, and extends in the vertical direction. For example, the battery pack 7 is inserted into the battery pack accommodating cavity 51. The first slide rail 75 is aligned with the second slide rail 55, and under the cooperation between the first slide rail and the second slide rail, the battery pack 7 is righted and moves downward in a correct direction until the battery pack is inserted to the bottom.

It should be noted that specific structure forms of the first slide rail 75 and the second slide rail 55 may be opposite to that in the above embodiment, in other words, the first slide rail 75 may be of the protrusion or convex rib structure, and the second slide rail 55 is of the strip-shaped groove structure correspondingly. This is not limited in this embodiment.

Still referring to FIG. 3, the battery pack 7 further includes a circuit assembly (not shown) disposed in the housing 71 and a battery core assembly (not shown) for charging and discharging. A lower end portion of the first slide rail 75 is provided with a long notch. The circuit assembly includes a circuit board connected to the battery core assembly and a connection terminal connected to the circuit board, and the connection terminal is electrically connected to the conductive electrode sheet 53 through the long notch.

The housing 71 is provided with a power supply port 72 corresponding to the connection terminal, and the power supply port is configured for insertion of the conductive electrode sheet 53, so that the conductive electrode sheet is electrically connected to the connection terminal. When the battery pack 7 is mounted in the battery pack accommodating cavity 51, the connection terminal of the battery pack 7 is connected to the conductive electrode sheet 53 by insertion, and the battery pack 7 is electrically connected to the driving assembly 6 by the circuit assembly.

In an embodiment, the circuit assembly of the battery pack 7 is configured to connect the at least two battery packs 7 mounted in the battery pack accommodating cavity 51 and the driving assembly 6. In this embodiment, because a high voltage is used for the battery pack 7, at least one battery pack 7 can actually supply electric energy to the driving assembly 6. At least two battery packs 7 with high voltage are designed in parallel, so that an endurance time of the electric lawn mower is improved, and the electric lawn mower can be switched mutually between two working modes or power supply modes of a single pack and a multi-pack.

With reference to FIG. 3, FIG. 24, and FIG. 26, in an optional embodiment, the battery pack 7 is further provided with a buckle 73 fixed to the battery pack accommodating cavity 51 after the battery pack is connected to the battery pack accommodating cavity 51 by insertion and a button 74 for disengaging the buckle 73 from the battery pack accommodating cavity 51. In this embodiment, the buckle 73 may be disposed on a front surface or a back surface of the housing 71 and protrudes from the surface of the housing 71. The buckle is generally located at a middle upper portion of the housing 71 and is in a concave shape with a downward opening, and two sides of the buckle are provided with stop wings, which are used for a structure clamped or embedded there between (similar to a locking portion 571 of a locking member 57 described below).

A locking member 57 configured to engage with the buckle 73 is disposed in the battery pack accommodating cavity 51 for fixing the battery pack 7 after the battery pack is inserted into the battery pack accommodating cavity 51. After the battery pack 7 is inserted into the battery pack accommodating cavity 51 in place, in other words, after the conductive electrode sheet 53 in the battery pack accommodating cavity 51 is inserted into the power supply port 72 of the battery pack 7, the locking member 57 abuts against the battery pack 7, and the battery pack 7 is limited in an insertion direction of the battery pack, in other words, an up-down direction.

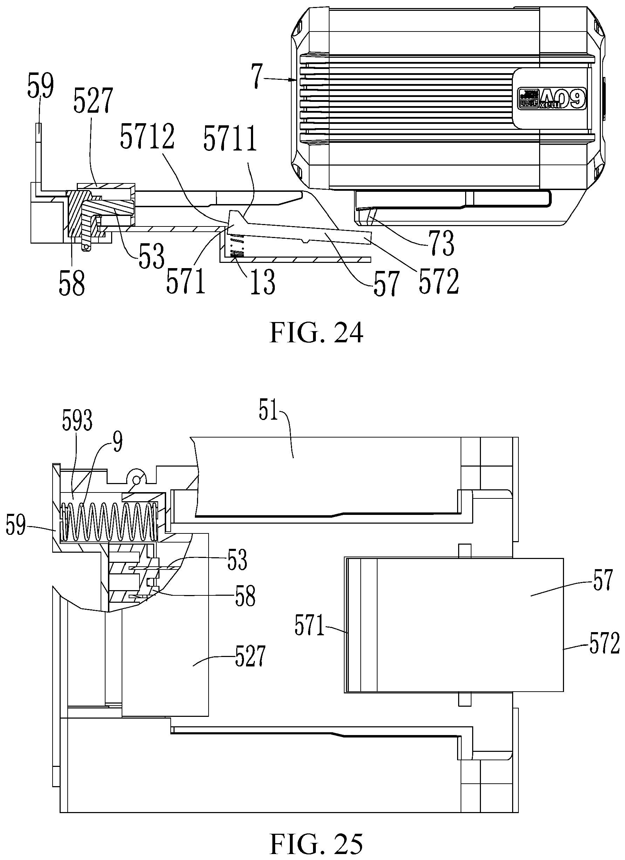

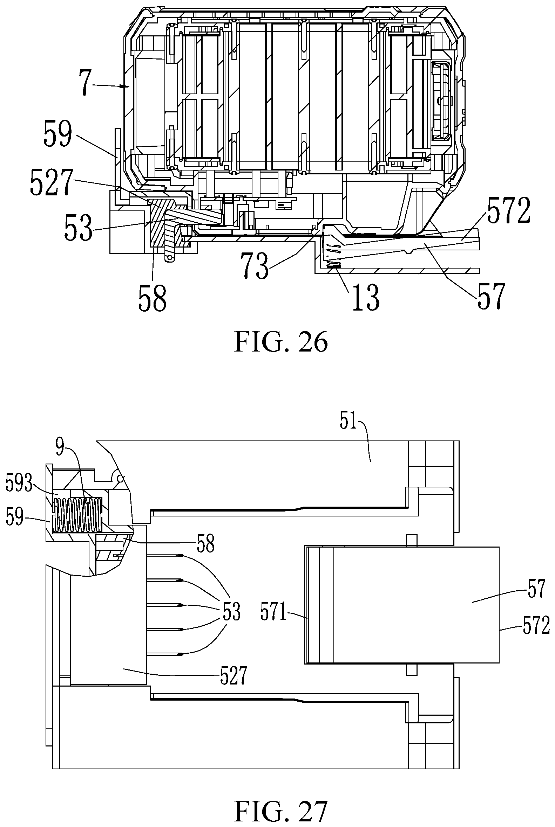

With reference to FIG. 25 and FIG. 27, the locking member 57 is plate-shaped or sheet-shaped, and a width of the locking member is slightly less than a width of a slot of the buckle 73, to facilitate the embedded engagement between the locking member 57 and the buckle 73, and the concave-shaped structure design of the buckle 73 with the stop wings ensures that the locking member 57 is not easily disengaged from the buckle unexpectedly after being engaged with the buckle 73.

The locking member 57 includes a locking portion 571 and an unlock trigger portion 572 The locking portion 571 and the unlock trigger portion 572 may be two ends of the locking member 57 respectively. The locking member 57 is rotatably connected to the battery pack accommodating cavity 51, and a rotational connection point between the locking member and the battery pack accommodating cavity is located between the locking portion 571 and the unlock trigger portion 572. The locking member 57 can rotate around the rotational connection point between the locking member and the battery pack accommodating cavity 51 and is switched between a locked state and an unlocked state. When being in the locked state, the locking member 57 abuts against the battery pack 7 to limit the battery pack. When being in the unlocked state, the locking member 57 is disengaged from the battery pack 7, and a limiting effect is lost for the battery pack 7, so that the battery pack can freely move in the battery pack accommodating cavity 51.

As shown in FIG. 24 and FIG. 26, a cross-sectional shape of the locking portion 571 is a right-angled trapezoid, and the locking portion includes a guide inclined surface 5711 and a straight stopping surface 5712. The guide inclined surface 5711 faces an opening of the battery pack accommodating cavity 51, in other words, the guide inclined surface is upward, and the stopping surface 5712 faces away from the opening of the battery pack accommodating cavity 51, in other words, the stopping surface is downward. An elastic member 13 is disposed between the locking member 57 and the battery pack accommodating cavity 51. The elastic member 13 applies an elastic force to the locking member 57, to provide the locking member with a tendency of moving toward the locked state or maintaining the locked state.

Therefore, in a process in which the battery pack 7 is inserted into the battery pack accommodating cavity 51, when the battery pack 7 moves until the buckle 73 is in contact with the guide inclined surface 5711 of the locking member 57, the buckle 73 slides on the guide inclined surface 5711. Until the buckle 73 crosses the guide inclined surface 5711, under the action of the elastic member 13, the locking portion 571 of the locking member 57 is clamped into a slot of the buckle 73, and the buckle 73 is attached to the stopping surface 5712 (as shown in FIG. 26). Upward movement of the battery pack 7 is restricted to implement fixing. In this case, the locking member 57 is in the locked state.

Through arrangement of the elastic member 13, after the battery pack 7 is inserted into the battery pack accommodating cavity 51 in place, the locking member 57 is stably in the locked state, so that the locking member 57 is prevented from being ejected from the buckle 73 due to an unexpected external force action, resulting in loss of a fixing effect for the battery pack 7.

The unlock trigger portion 572 is configured to receive an external force to rotate the locking member 57, so that the locking member is switched from the locked state to the unlocked state. In a specific embodiment, when the battery pack 7 is downward inserted into the battery pack accommodating cavity 51, the button 74 on the battery pack is driven to move downward together until the battery pack 7 is locked and fixed by the locking member 57, and the button 74 moves to correspond to the unlock trigger portion 572. Specifically, the button 74 may be located outside the unlock trigger portion 572; or the unlock trigger portion 572 is inserted inside the button 74.

When the battery pack 7 needs to be removed from the battery pack accommodating cavity 51, the button 74 is pressed and the unlock trigger portion 572 is touched, so that the locking member 57 is rotated, the locking portion 571 is removed from the buckle 73, and the battery pack 7 is unlocked. When limiting and fixing are released, the battery pack can be smoothly removed from the battery pack accommodating cavity 51.

In another optional embodiment, the button 74 for performing an unlocking operation on the battery pack 7 may be disposed on the battery pack accommodating cavity 51. The locking member 57 is linked to the button 74, and can be driven by the button 74 to extend into the battery pack accommodating cavity 51 or retract into the battery pack accommodating cavity 51.

With reference to FIG. 18, FIG. 19, and FIG. 22, in this embodiment, a sliding groove 511 facing the opening of the battery pack accommodating cavity 51 is provided close to an upper end of the battery pack accommodating cavity 51. The locking member 57 is slidably disposed in the sliding groove 511, and the locking portion 571 may extend out of or retract to the sliding groove 511. For the structures of the guide inclined surface 5711 and the stopping surface 5712 of the locking portion 571, reference may be made to the description in the foregoing embodiment. Details are not described herein again.

The button 74 is generally vertically disposed and is rotatably connected to the battery pack accommodating cavity 51. A lower end of the button is rotatably connected to the locking member 57. Specifically, an upper surface of the unlock trigger portion 572 of the locking member 57 is recessed downward to form a groove, a shift level is formed on the lower end of the button 74, and the shift level is embedded into the groove. A left side inner wall and a right side inner wall of the groove are pushed through left-right movement of the shift level, so that the locking member 57 moves in the sliding groove 511, and then the locking member is switched between the locked state and the unlocked state.

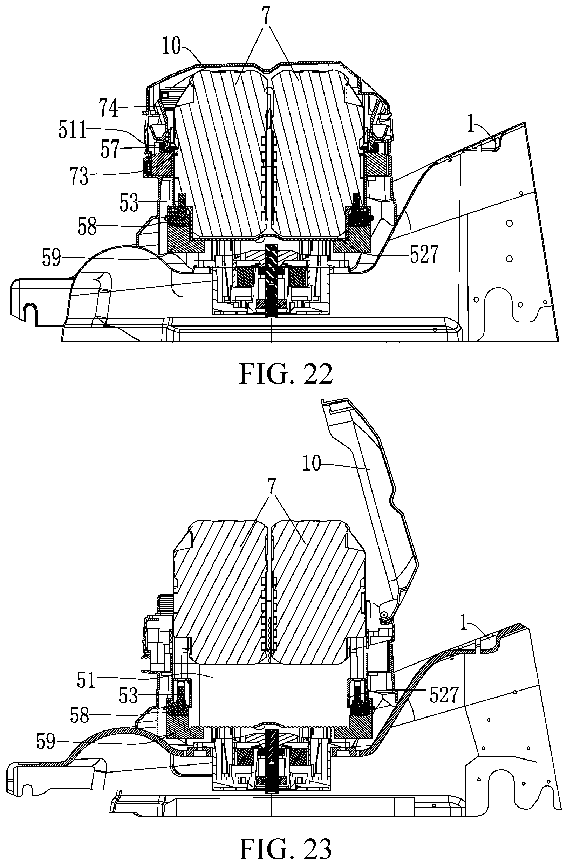

A torsion spring (not shown) is disposed between the button 74 and the battery pack accommodating cavity 51. Specifically, the button 74 may be rotatably disposed on the battery pack accommodating cavity 51 by using a pin shaft, and the torsion spring is sleeved outside the pin shaft. A torsion force applied by the torsion spring to the button 74 provide the button with a tendency of rotating anticlockwise all the time at a viewing angle shown in FIG. 22. **In** this way, through engagement between the shift level and the groove, the button 74 applies a rightward pushing force to the locking member 57, so that the locking portion 571 of the locking member 57 always tends to slide out of the sliding groove 511 and extend into the battery pack accommodating cavity 51. In other words, the locking member 57 tends to move toward the locked state or maintain the locked state.

In an actual application, the battery pack 7 is downward inserted into the battery pack accommodating cavity 51. When the buckle 73 is in contact with the locking portion 571 of the locking member 57, the locking member 57 is pushed to move in the sliding groove 511 (moving leftward), the button 74 is driven to rotate clockwise, and the torsion spring rotates to store energy. When the battery pack 7 is inserted in place, the button 74 rotates anticlockwise under the action of the torsion spring, to push the locking member 57 to the right. The locking portion 571 of the locking member 57 enters the slot of the buckle 73 with a "click" sound, so that the battery pack 7 is locked and fixed.

When the battery pack 7 needs to be removed, an upper end of the button 74 is pushed rightward. The button 74 rotates clockwise to drive the locking member 57 to move leftward, and the locking portion 571 is disengaged from the buckle 73, so that the battery pack 7 can be unlocked.

There are at least two battery pack accommodating cavities 51, which include, but are not limited to, two battery pack accommodating cavities shown in FIG. 3, FIG. 5, FIG. 15, FIG. 18, and FIG. 19. In another embodiment, three or more battery pack accommodating cavities 51 may be disposed on the body 1. This is not specifically limited herein.

As described below, there are a plurality of conductive electrode sheets 53 disposed in each battery pack accommodating cavity 51. The plurality of conductive electrode sheets 53 include at least power supply electrode sheets for transmitting electric energy, and may further include signal electrode sheets for transmitting a control signal. In this embodiment, the at least two battery pack accommodating cavities 51 are arranged in parallel. Correspondingly, the power supply electrode sheets included in the conductive electrode sheets 53 in the at least two battery pack accommodating cavities 51 are also arranged in parallel. In this way, when one battery pack accommodating cavity 51 is connected to the battery pack 7 and one battery pack accommodating cavity 51 is in an idle state in which the battery pack accommodating cavity is not connected to the battery pack 7, for example, a case shown in FIG. 15 specifically, a battery pack 7 is mounted in the battery pack accommodating cavity 51 on the left side, and a battery pack 7 is not mounted in the battery pack accommodating cavity 51 on the right side, and the conductive electrode sheet 53 disposed in the battery pack accommodating cavity 51 in the idle state (the battery pack accommodating cavity 51 on the right side shown in FIG. 15) is electrified.

In other words, when a conductive electrode sheet 53 in the battery pack accommodating cavity 51 is connected to one of the at least two battery packs 7 and the other battery pack 7 is in a state in which the battery pack is not connected to a conductive electrode sheets 53, the conductive electrode sheet 53 in the battery pack accommodating cavity 51 in an unconnected state is electrified.

In a specific embodiment, the conductive electrode sheets 53 are disposed on a bottom wall of the battery pack accommodating cavity 51 and extend upward. In this way, without a shielding structure, the conductive electrode sheets 53 are exposed in the battery pack accommodating cavity 51. Further, the electrified conductive electrode sheet 53 has a large safety risk, and anti-electric shock protection is required.

Certainly, in another optional embodiment, the conductive electrode sheets 53 are disposed on a side wall of the battery pack accommodating cavity 51 and extend outward. In this embodiment, the problem also exists.

It should be noted that when high-voltage multi-pack power supply is used, a problem that the exposed conductive electrode sheets 53 are electrified not only exists in a scenario in which the at least two battery packs 7 are connected in parallel, but also exists in a scenario in which the at least two battery packs 7 are connected in series. For example, in a specific embodiment, two battery pack accommodating cavities 51 connected in series are provided. When one battery pack accommodating cavity 51 is provided with the battery pack 7 and the other battery pack accommodating cavity 51 is not provided with the battery pack 7, the conductive electrode sheets 53 in the battery pack accommodating cavity 51 without the battery pack 7 are also electrified.

In other words, when power supply is performed by using a plurality of battery packs in high voltage, whether the plurality of battery packs 7 are connected in series or in parallel, in a case that there is a conductive electrode sheet 53 connected to the battery pack 7, and there is also a conductive electrode sheet 53 not connected to the battery pack 7, a problem that the conductive electrode sheet 53 that is not connected to the battery pack 7 is electrified exists.

In this specification, a description is made by using multi-pack parallel as a main scenario. However, it can be learned based on the above description that an anti-electric shock protection solution described below is similarly applicable to a scenario in which a plurality of battery packs are connected in series, and the protection scope of the embodiments of the present invention is not limited thereto.

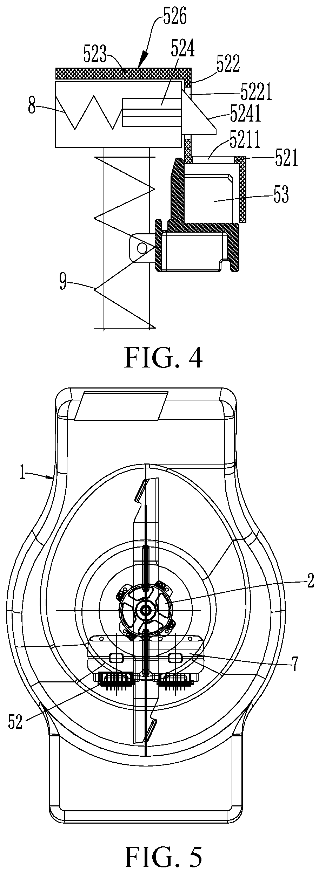

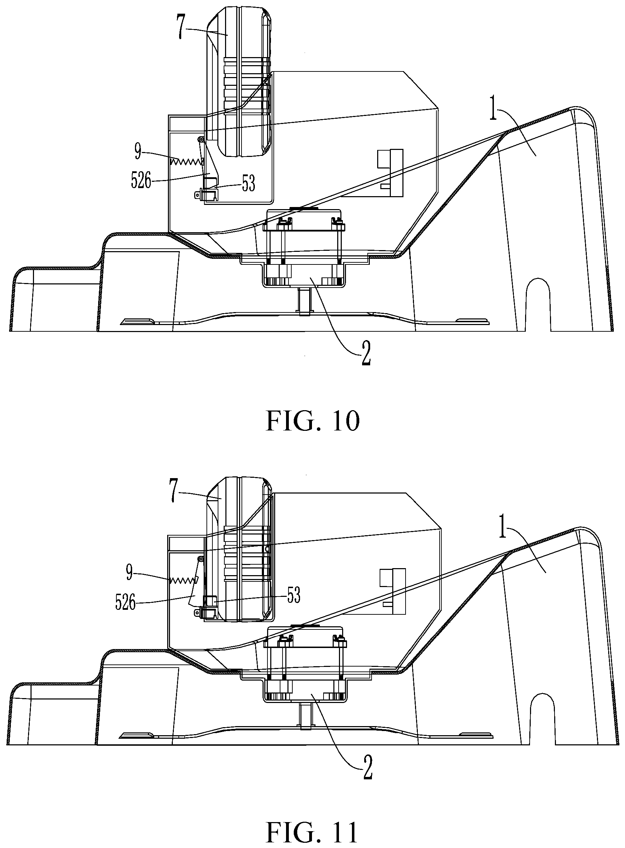

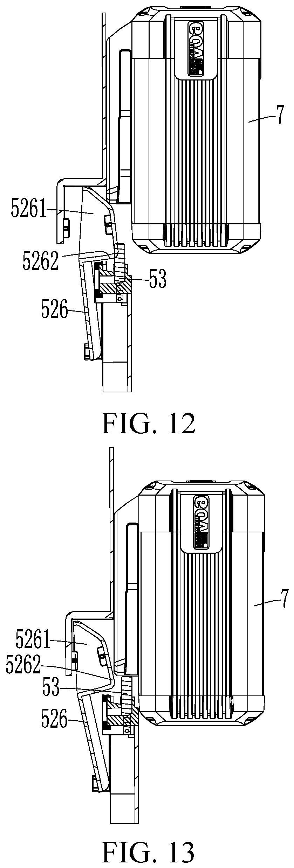

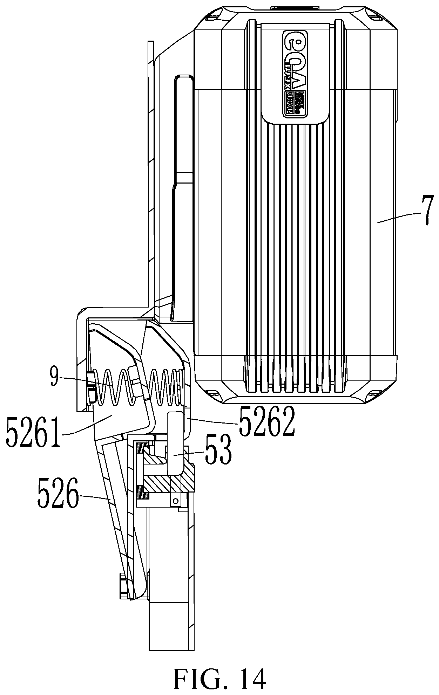

In view of this, referring to FIG. 4 to FIG. 26, each battery pack accommodating cavity 51 is provided with a shielding mechanism 52 configured to shield the conductive electrode sheet 53 and an elastic member 9 configured to apply an action force to the shielding mechanism 52 to cause the shielding mechanism 52 to shield the conductive electrode sheet 53. After the battery pack 7 is inserted in place, the shielding mechanism 52 moves, and the elastic member 9 correspondingly connected to the shielding mechanism deforms. In other words, when the battery pack 7 is inserted into the battery pack accommodating cavity 51, the shielding mechanism 52 is pushed by the battery pack 7 to move, so that the conductive electrode sheet 53 is exposed to be connected to the power supply port 72 of the battery pack 7. The shielding mechanism 52 moves to drive the elastic member 9 to deform and store energy, and when the battery pack 7 moves out of the battery pack accommodating cavity 51, the shielding mechanism 52 moves again under the action of the elastic force of the elastic member 9 to shield the conductive electrode sheet 53.

As shown in FIG. 4 and FIG. 5, in a first feasible embodiment, the conductive electrode sheet 53 is exposed at the bottom of the battery pack accommodating cavity 51, the shielding mechanism 52 is disposed above the conductive electrode sheet 53, and the second slide rail 55 is disposed above the shielding mechanism 52. The battery pack 7 smoothly abuts against the shielding mechanism 52 by using the second slide rail 55 to push the shielding mechanism to move.

The shielding mechanism 52 includes an abutting portion 525 for abutting against the battery pack 7 when the battery pack 7 is inserted. An end portion of the battery pack 7 provided with the power supply port 72 is first in contact with the abutting portion 525 to push the shielding mechanism 52 to move. In this embodiment, the abutting portion 525 is a plane or an inclined surface. Certainly, in another embodiment, the abutting portion 525 may alternatively be in another shape, for example, a block rather than a surface. This is not specifically limited herein. To enable the battery pack 7 to more smoothly push the shielding mechanism 52 by using the abutting portion 525, the plane or the inclined surface may be an uneven surface. The uneven surface may be an uneven surface provided with convex points to increase a friction force between the battery pack 7 and the abutting portion 525.

In this embodiment, a telescopic direction of the elastic member 9 is consistent with the insertion direction of the battery pack 7, and the elastic member 9 is disposed between the shielding mechanism 52 and the battery pack accommodating cavity 51. More specifically, the elastic member 9 is disposed at the bottom of the battery pack accommodating cavity 51 and extends upward, is located between the conductive electrode sheet 53 and the inner wall of the battery pack accommodating cavity 51, and is parallel to the insertion direction of the battery pack 7. The elastic member 9 is in a compressed state. When the battery pack 7 is inserted into the battery pack accommodating cavity 51 and pushes the shielding mechanism 52 to move downward, the shielding mechanism 52 compresses the elastic member 9 for storing energy. In the insertion direction of the battery pack 7, the shielding mechanism 52 is located above the conductive electrode sheet 53 under the action force of the elastic member 9.

The shielding mechanism 52 includes a shielding plate 526. The shielding plate 526 is provided with a first opening 5211 corresponding to the conductive electrode sheet 53. When the battery pack 7 is inserted into the battery pack accommodating cavity 51 and pushes the shielding plate 526 to press downward, the conductive electrode sheet 53 is inserted into the power supply port 72 of the battery pack 7 through the first opening 5211. In this embodiment, a contact surface between the shielding plate 526 and the battery pack 7 is the abutting portion 525, and the abutting portion 525 is a plane.

To avoid a case that the shielding mechanism 52 is touched accidentally and the shielding mechanism is pushed to press downward, resulting in unexpected exposure of the conductive electrode sheet 53 and to improve the safety performance of use, as shown in FIG. 4, the shielding mechanism 52 further includes a trigger block 524 abutting against the shielding plate 526 to prevent the shielding plate 526 from moving downward unexpectedly for avoiding misoperation. The lawn mower further includes an elastic mechanism 8. The elastic mechanism 8 is disposed between the trigger block 524 and the inner wall of the battery pack accommodating cavity 51 and is configured to apply an outward elastic force to the trigger block 524.

The shielding plate 526 includes a substantially horizontal connection plate 523 connected to the elastic member 9, a vertical second shielding plate 522 disposed perpendicular to the connection plate 523, and a substantially horizontal first shielding plate 521 disposed perpendicular to the second shielding plate 522 and disposed above the conductive electrode sheet 53. The connection plate 523, the second shielding plate 522, and the first shielding plate 521 sequentially form a step shape and are disposed above the conductive electrode sheet 53. The elastic mechanism 8 is consistent with the elastic member 9, and is any one of a compression spring, a tension spring, or another spring. The trigger block 524 abuts against the second shielding plate 522. The second shielding plate 522 is provided with a second opening 5221 for the trigger block 524 to pass through. A part of the trigger block 524 passing through the second opening 5221 is provided with a slope surface 5241, and the slope surface 5241 inclines from top to bottom in a height direction of the battery pack accommodating cavity 51.

Actually, when an object other than the battery pack 7 is inserted to cause an external force to be acted on the shielding plate 526, because the trigger block 524 is inserted into the second opening 5221 of the second shielding plate 522, the shielding plate 526 is limited and cannot move downward, to avoid unexpected exposure of the conductive electrode sheet 53.

When the battery pack 7 is inserted into the battery pack accommodating cavity 51, a lower end of the battery pack is in contact with the slope surface 5241 of the trigger block 524, the trigger block 524 is pushed to move leftward, and the elastic mechanism 8 is compressed and stores energy. Until the trigger block 524 moves out of the second opening 5221, the shielding plate 526 is released, so that the shielding plate can be pushed downward by the battery pack 7, and the conductive electrode sheet 53 is exposed and is connected to the battery pack 7. Correspondingly, when the battery pack 7 is removed, energy stored by the elastic mechanism 8 is released, the trigger block 524 is pushed to move rightward and is inserted into the second opening 5221, and limitation to the shielding plate 526 is recovered.

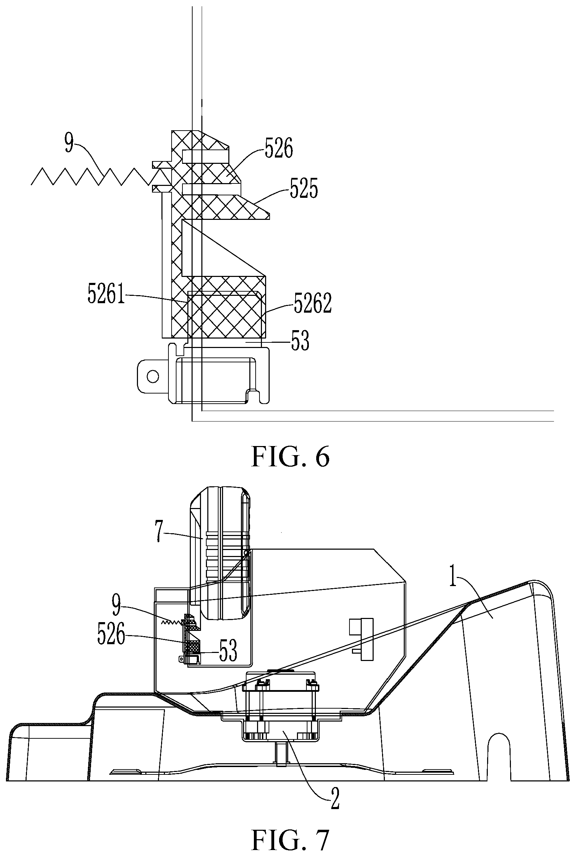

Referring to FIG. 6 to FIG. 8, in a second feasible embodiment, the elastic member 9 deforms in a direction perpendicular to the insertion direction of the battery pack 7. In the direction perpendicular to the insertion direction of the battery pack 7, the shielding mechanism 52 is located on an outer side of the conductive electrode sheet 53 under the action force of the elastic member 9. In this embodiment, the shielding mechanism 52 is still disposed above the conductive electrode sheet 53 under the action force of the elastic member 9.

Same as the first embodiment, the shielding mechanism 52 includes a shielding plate 526 connected to the elastic member 9, one end of the elastic member 9 is disposed on a side wall of the battery pack accommodating cavity 51, and the shielding plate 526 is disposed perpendicular to the elastic member 9. The shielding mechanism 52 is movable relative to the conductive electrode sheet 53 in the direction perpendicular to the insertion direction of the battery pack 7. In short, as shown in FIG. 6, the insertion direction of the battery pack 7 is an up-down direction, and a moving direction of the shielding mechanism 52 is a left-right horizontal direction.

The shielding plate 526 includes an accommodating portion 5261 for accommodating the conductive electrode sheet 53, and the accommodating portion 5261 is recessed inward from the bottom of the shielding plate 526. The shielding plate 526 further includes a notch 5262 disposed opposite to the elastic member 9 and communicating with the accommodating portion 5261. The shielding plate 526 moves, so that the conductive electrode sheet 53 is exposed through the notch 5262.

In this embodiment, the abutting portion 525 is a contact portion between the top of the shielding plate 526 and the battery pack 7, and the portion is an inclined surface, so that when the battery pack 7 is inserted into the battery pack accommodating cavity 51, the battery pack 7 pushes the shielding plate 526 to one side by using the abutting portion 525 to expose the conductive electrode sheet 53 to be connected to the power supply port 72 of the battery pack 7.

The abutting portion 525 includes a plurality of continuous inclined surfaces, so that the battery pack 7 is in contact with each inclined surface one by one to push the shielding plate 526. Inclination angles of the inclined surfaces may be consistent or may be inconsistent. This is not specifically limited herein. Certainly, in another embodiment, the abutting portion 525 may alternatively include only one inclined surface, as long as the shielding plate 526 can move under the pushing of the battery pack 7, so that the conductive electrode sheet 53 can be exposed.

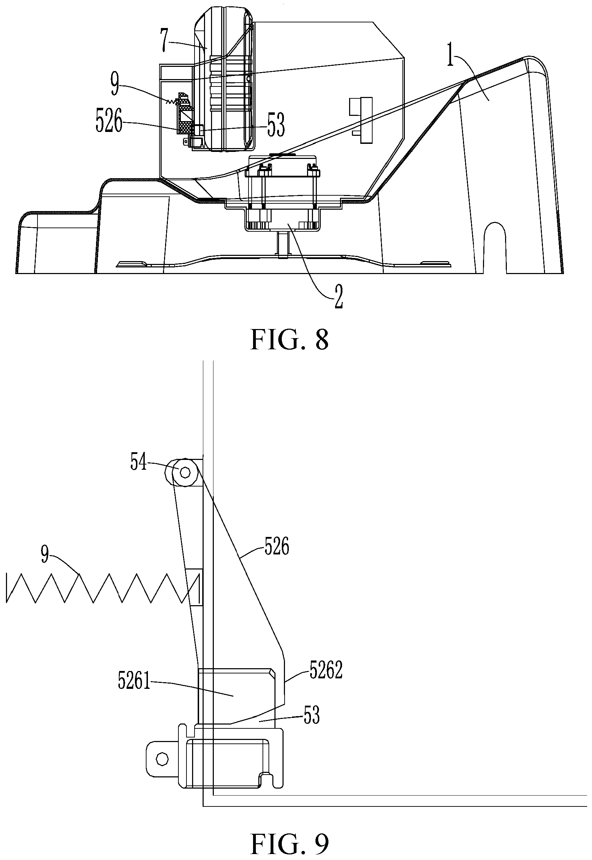

Referring to FIG. 9 to FIG. 14, in a third feasible embodiment, same as the second embodiment, the elastic member 9 deforms in the direction perpendicular to the insertion direction of the battery pack 7. In the direction perpendicular to the insertion direction of the battery pack 7, the shielding mechanism 52 is located on an outer side of the conductive electrode sheet 53 under the action force of the elastic member 9.

Different from the second embodiment in which the shielding mechanism 52 shields or exposes the conductive electrode sheet 53 by translation, in this embodiment, the shielding mechanism 52 shields or exposes the conductive electrode sheet 53 by rotation relative to the battery pack accommodating cavity 51. Specifically, the shielding mechanism 52 includes a shielding plate 526 connected to the elastic member 9. One end of the elastic member 9 is disposed on a side wall of the battery pack accommodating cavity 51, and the shielding plate 526 is disposed in the battery pack accommodating cavity 51 by using a rotating shaft 54. The shielding mechanism 52 may rotate relative to the conductive electrode sheet 53 in the direction perpendicular to the insertion direction of the battery pack 7. In short, as shown in FIG. 6, the insertion direction of the battery pack 7 is an up-down direction, and the shielding mechanism 52 rotates in a left-right horizontal direction.

The shielding mechanism 52 is still disposed above the conductive electrode sheet 53 under the action force of the elastic member 9. One end of the shielding plate 526 is rotatably connected to the rotating shaft 54, and the other end is used for shielding the conductive electrode sheet 53. To enable the battery pack 7 to push the shielding plate 526 when being inserted into the battery pack accommodating cavity 51, the shielding plate 526 forms an angle to the insertion direction of the battery pack 7 in a shielding state. In the insertion direction of the battery pack 7, the shielding plate 526 inclines from top to bottom. The abutting portion 525 is a side surface where the shielding plate 526 is in contact with the battery pack 7, and the side surface is an inclined surface.

The shielding plate 526 includes an accommodating portion 5261 for accommodating the conductive electrode sheet 53, and the accommodating portion 5261 is recessed inward from the bottom of the shielding plate 526. The shielding plate 526 further includes a notch 5262 disposed opposite to the elastic member 9 and communicating with the accommodating portion 5261. The shielding plate 526 moves, so that the conductive electrode sheet 53 is exposed through the notch 5262. When the battery pack 7 is inserted into the battery pack accommodating cavity 51, the shielding plate 526 rotates towards one side by using the rotating shaft 54 under the pushing of the battery pack 7, so that the conductive electrode sheet 53 is exposed and is electrically connected to the power supply port 72 of the battery pack 7.

Referring to FIG. 15 to FIG. 26, in a fourth feasible embodiment, the shielding mechanism 52 is designed with a protective cover 527. In detail, referring to FIG. 16 and FIG. 17, the protective cover 527 is in the shape of a hollow housing, and is provided with two openings respectively facing the bottom wall and the side wall of the battery pack accommodating cavity 51. The protective cover 527 is disposed in the battery pack accommodating cavity 51 and is movable relative to the conductive electrode sheet 53, so that the protective cover is switched between a protection state (the shielding state described above) and a working state.

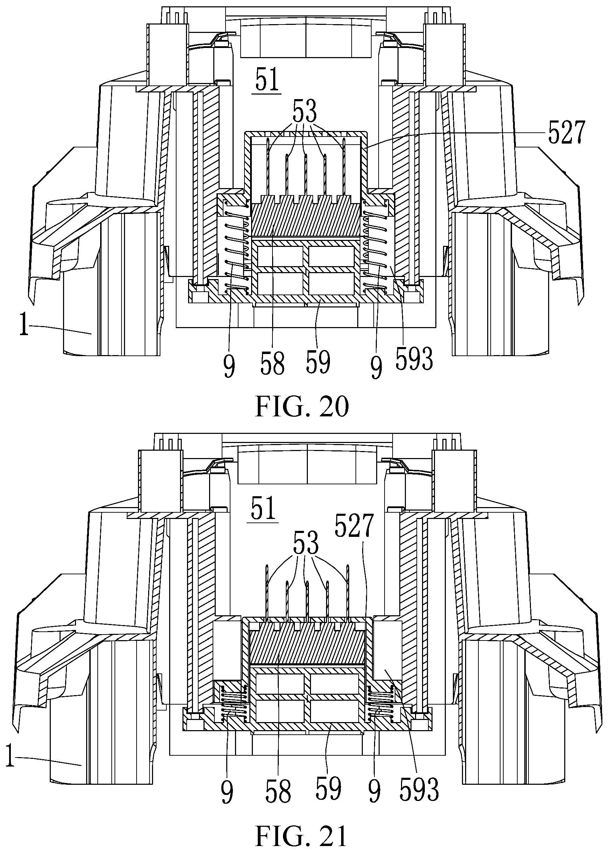

The protective cover 527 is provided with an opening 5271 (similar to the first opening 5211 described above) corresponding to the conductive electrode sheet 53. When the protective cover is in the protection state, the conductive electrode sheet 53 is accommodated in the protective cover 527, and the protective cover 527 shields the conductive electrode sheet 53, to prevent the conductive electrode sheet 53 from being exposed, for example, a state shown in FIG. 20, FIG. 23, FIG. 24, and FIG. 25. In this case, the battery pack 7 is not inserted into the battery pack accommodating cavity 51 in which the protective cover 527 in the protection state is located, or the battery pack 7 is inserted into the battery pack accommodating cavity 51, but the battery pack is not electrically connected to the conductive electrode sheet 53, and the conductive electrode sheet 53 in the battery pack accommodating cavity 51 is electrified in a case that battery pack 7 is inserted into another battery pack accommodating cavity 51 and there is a demand for anti-electric shock protection. Therefore, in this case, it is necessary for the protective cover 527 to shield the conductive electrode sheet 53 timely to prevent accidental touch of a human body, thereby protecting the personnel safety.

When the protective cover is in the working state, the conductive electrode sheet 53 passes through the opening 5271, the protective cover 527 releases the shielding of the conductive electrode sheet 53, and the conductive electrode sheet 53 is exposed for being configured for insertion and engagement with the power supply port 72 of the battery pack 7, for example, a state shown in FIG. 21, FIG. 22, FIG. 26, and FIG. 27. In this case, the battery pack 7 is inserted into the battery pack accommodating cavity 51 in which the protective cover 527 in the working state is located, and the battery pack 7 is electrically connected to the conductive electrode sheet 53. Therefore, the battery pack 7 can push the protective cover 527 to be switched from the protection state to the working state.

Further, the elastic member 9 is disposed between the inner wall of the battery pack accommodating cavity 51 and the protective cover 527, and is configured to apply a restoring force to the protective cover 527. Same as the above embodiment, in this embodiment, the elastic member 9 may be a spiral spring. When the battery pack 7 pushes the protective cover 527 to be switched from the protection state to the working state, the elastic member is synchronously driven by the protective cover 527 to store energy.

A specific form in which the elastic member 9 is driven by the protective cover 527 to store energy is related to an initial form of the elastic member. Specifically, if the elastic member 9 is initially in a compressed state (in this case, the elastic member 9 is a compression spring), and when the battery pack 7 pushes the protective cover 527 to be switched from the protection state to the working state, the elastic member 9 is pushed and compressed by the protective cover 527. On the contrary, if the elastic member 9 is initially in a stretched state (in this case, the elastic member 9 is a tension spring), and when the battery pack 7 pushes the protective cover 527 to be switched from the protection state to the working state, the elastic member 9 is stretched by the protective cover 527. In a preferred embodiment, the elastic member 9 is the compression spring.

A direction of the restoring force applied by the elastic member 9 to the protective cover 527 is opposite to the direction in which the battery pack 7 is inserted into the battery pack accommodating cavity 51. Specifically, the battery pack 7 is downward inserted into the battery pack accommodating cavity 51, and the elastic member 9 always applies an upward restoring force to the protective cover 527. The plurality of conductive electrode sheets 53 disposed in each battery pack accommodating cavity 51 extend vertically upward from the bottom of the battery pack accommodating cavity 51. Therefore, the elastic member 9 applies the upward restoring force to the protective cover 527, to provide the protective cover 527 with a tendency of moving toward the shielding state or maintaining the shielding state.

**In** this way, when the battery pack 7 is inserted into the battery pack accommodating cavity 51, the protective cover 527 is pushed to move downward and is switched from the protection state to the working state, and the elastic member 9 is compressed to deform and store energy simultaneously. Under the engagement between the locking member 57 and the buckle 73, the battery pack 7 is maintained in a fixed state. When the engagement between the locking member 57 and the buckle 73 is released and the battery pack 7 is removed, the protective cover 527 loses a jacking force applied by the battery pack 7, and the elastic member 9 that is compressed to store energy is released and stretched to push the protective cover 527 upward, so that the protective cover is restored to the protection state to shield the conductive electrode sheet 53.

The elastic member 9 is in a state in which elastic potential energy is minimum when the protective cover 527 is in the protection state. **In** other words, when the protective cover 527 is in the protection state, the deformation of the elastic member 9 is minimum. It should be noted that, in this case, the elastic member 9 is designed not to be in a natural state in which the elastic potential energy is zero, but to be in a slight deformation state, so that an initial elastic force or a pre-jacking force is applied to the protective cover 527.

Such a design is intended to, in an aspect, ensure that the protective cover 527 can be stably in the protection state, and the protective cover 527 is prevented from shaking or moving up and down due to external force caused by jolting of the lawn mower, thereby avoiding excessive abrasion of the protective cover 527. **In** another aspect, the protective cover 527 has a pre-starting function, and the movement and the state switching are started only when the external force reaches a degree of overcoming the initial elastic force of the elastic member 9, so that the protective cover 527 is prevented from being started by accidental touch of the user to a certain extent, thereby avoiding the occurrence of an electric shock accident caused by an accident.

The initial elastic force applied by the elastic member 9 to the protective cover 527 should meet a safety regulation requirement and should not be excessively small, otherwise in an aspect, it is difficult to resist the external force, thereby further avoiding a problem of shaking of the protective cover 527. In another aspect, the initial elastic force is excessively small. As a result, the protective cover 527 is started and moves too easily, and the electric shock accident caused by accidental touch cannot be well avoided.

Certainly, the initial elastic force applied by the elastic member 9 to the protective cover 527 should not be excessively large. Otherwise, when the battery pack 7 is inserted, the strength of pushing the protective cover 527 to be started downward is relatively large, and after the battery pack 7 is inserted in place (the protective cover 527 is in the working state), the elastic member 9 has a relatively large compression degree, resulting in fatigue of the elastic member 9 after working for a long time.

According to the foregoing factors, when the protection safety and ease of starting of the protective cover 527 are considered, the elastic member 9 is designed to have an initial elastic force applied to the protective cover 527 not less than 20 N and not greater than 40 N. For example, the initial elastic force may be 20 N, 25 N, 35 N, or 40 N.

When the protective cover 527 is in the working state, the elastic member 9 deforms and stores energy, and the elastic member has maximum elastic potential energy and applies an upward reaction elastic force to the protective cover 527. To facilitate removal of the battery pack 7, in an optional embodiment, the reaction elastic force applied by the elastic member 9 to the protective cover 527 is not less than a sum of a weight of the battery pack 7 and a weight of the protective cover 527. After the locking member 57 is unlocked, the battery pack 7 is bounced upward under the action of the reaction elastic force of the elastic member 9, so that an upper end of the battery pack 7 is higher than an upper end of the battery pack accommodating cavity 51, to facilitate taking.

By means of the above embodiment, the protective cover 527 movable relative to the conductive electrode sheet 53 is disposed, and through the action of the elastic member 9 on the protective cover 527, in a case that the battery pack 7 is not inserted into the corresponding battery pack accommodating cavity 51, the protective cover 527 shields the conductive electrode sheet 53, to avoid an electric shock accident caused by accidental touch of the conductive electrode sheet 53, thereby improving the safety performance of the electric lawn mower 100.

With reference to FIG. 16, FIG. 17, FIG. 20, FIG. 21, and FIG. 24 to FIG. 27, there are a plurality of conductive electrode sheets 53 disposed in each battery pack accommodating cavity 51, and there are a plurality of power supply ports 72 disposed on the battery pack 7 correspondingly. The plurality of conductive electrode sheets 53 are disposed on an electrode holder 58, and are fixed in the battery pack accommodating cavity 51 by using the electrode holder 58, thereby fixing the conductive electrode sheets 53.

According to the safety regulation requirement, a flame retardant material needs to set for a part with a distance to an electrified body within 3 mm, to ensure the safety performance. Specifically, in this embodiment, when the conductive electrode sheet 53 is electrified, the entire battery pack accommodating cavity 51 close to the conductive electrode sheet 53 needs to be made of a flame retardant material, which requires high costs.

In view of this, referring to FIG. 16, FIG. 17, FIG. 20, FIG. 21, and FIG. 24 to FIG. 27, in an embodiment, a support member 59 is disposed between the inner wall of the battery pack accommodating cavity 51 and the electrode holder 58. Therefore, the support member 59 separates the electrified conductive electrode sheet 53 from the battery pack accommodating cavity 51. To a certain extent, the support member 59 increases a distance between the conductive electrode sheet 53 and the inner wall of the battery pack accommodating cavity 51, so that the entire battery pack accommodating cavity 51 is not required to be made of the flame retardant material, thereby reducing the costs.

Further, the support member 59 and the body 1 are configured as different materials, and the support member 59 is configured to be made of a flame retardant material. The body 1 may be made of an existing known material, and only the support member 59 is made of the flame retardant material. In this way, the manufacturing cost is considered while a flame retardant effect is improved.

As shown in FIG. 16, FIG. 17, and FIG. 25, the support member 59 is generally block-shaped. The elastic member 9 is disposed between the support member 59 and the protective cover 527. In this embodiment, same as the first embodiment shown in FIG. 4 and FIG. 5, a displacement direction of the shielding mechanism 52 is consistent with the insertion direction of the battery pack 7, which are both in the up-down direction shown in FIG. 20 to FIG. 23. In the insertion direction of the battery pack 7, one end of the elastic member 9 forward abuts against the support member 59, and the other end of the elastic member backward abuts against the shielding mechanism 52 In this way, the elastic member 9 is disposed between the support member 59 and the protective cover 527 by bias and is configured to apply a restoring force to the protective cover 527.

In this implementation, the support member 59 is a separate component independent from the battery pack accommodating cavity 51 and the electrode holder 58. Actually, the support member may be manufactured alone as a standard member and assembled in the battery pack accommodating cavity 51. Certainly, in another feasible embodiment, the support member 59 may alternatively be configured to be integrally constructed with the battery pack accommodating cavity 51 and used as part of the structure of the battery pack accommodating cavity 51.

Further, the support member 59 not only has an effect of isolating the conductive electrode sheet 53 from the battery pack accommodating cavity 51, but also has guide and righting effects. Specifically, the support member 59 may be provided with a guiding portion 591 for guiding movement of the protective cover 527. As shown in FIG. 17, a surface of the support member 59 facing away from the inner wall of the battery pack accommodating cavity 51 protrudes outward to form the guiding portion 591, and the electrode holder 58 is disposed on the guiding portion 591. To limit the electrode holder 58 on the guiding portion 591, an upper surface of the guiding portion 591 is recessed downward to form a limiting groove, a lower surface of the electrode holder 58 forms a limiting bulge, and the limiting bulge may be embedded in the limiting groove.

With reference to FIG. 20 and FIG. 21, first base grooves 592 for abutting against the elastic members 9 are formed on two sides of the guiding portion 591, two sides of the lower end of the protective cover 527 are provided with second base grooves 5272 corresponding to the first base grooves 592, and the first base groove 592 and the second base groove 5272 are both provided with limiting convex points. With reference to FIG. 25, two ends of the elastic member 9 respectively abut against the first base groove 592 and the second base groove 5272, and are respectively limited by the limiting convex points.

In an optional embodiment, a specific solution that the support member 59 guides movement of the protective cover 527 by using the guiding portion 591 is as follows: as shown in FIG. 20, FIG. 21, FIG. 25, and FIG. 27, the guiding portion 591 and the electrode holder 58 are both spaced apart from the inner wall of the battery pack accommodating cavity 51 to define guiding ring cavities 593, and end portions of the protective cover 527 are movably inserted into the guiding ring cavities 593.

A width of the guiding portion 591 is preferably equal to a width of the electrode holder 58. Therefore, after the electrode holder 58 is mounted on the guiding portion 591 through the engagement between the limiting bulge and the limiting groove, the electrode holder 58 is approximately flush to an outer wall of the guiding portion 591, and the electrode holder and the guiding portion are both spaced apart from the inner wall of the battery pack accommodating cavity 51 to define the guiding ring cavities 593.

An end portion of the protective cover 527 provided with the second base groove 5272 is movably inserted into the guiding ring cavity 593, and by means of the limiting effect of the electrode holder 58, the guiding portion 591, and the inner wall of the battery pack accommodating cavity 51 defining the guiding ring cavities 593, guiding, limiting, and righting of the movement of the protective cover 527 are achieved.

Certainly, the solution that the support member 59 guides the movement of the protective cover 527 is not limited to the embodiment. In another feasible embodiment, any guiding solution with the support member 59 should be included in the protection scope of this embodiment.

For example, in another feasible embodiment, the guiding portion of the support member 59 is a cavity facing an opening, and the electrode holder 58 is disposed in the cavity and is spaced apart from an inner wall of the cavity. The lower end of the protective cover 527 may be inserted into a gap between the electrode holder 58 and the inner wall of the cavity to implement guiding and limiting. Different from the solution that the protective cover 527 integrally covers the outside of the electrode holder 58 and the guiding portion 591 in the foregoing embodiment, in this embodiment, the protective cover 527 is partially accommodated in the support member 59.

Alternatively, in still another feasible embodiment, the guiding portion of the support member 59 is a guiding groove with an upward opening. The electrode holder 58 is disposed on the upper surface of the support member 59 and is located inside the guiding groove, the lower end of the protective cover 527 is inserted into the guiding groove, and the elastic member 9 is disposed between the groove bottom of the guiding groove and the lower end of the protective cover 527 by bias.

The movement of the protective cover 527 is guided by using the support member 59 necessary for achieving the safety performance in the foregoing embodiments, without additionally arranging a guiding structure, to achieve a variety of uses of a structure, thereby simplifying the structure. In other words, without changing the structure of the original electrode holder 58, a support member 59 is additionally disposed in the battery pack accommodating cavity 51, to achieve the functions of flame retardancy and guiding and limiting of the protective cover 527 simultaneously.

## Claims

1. An electric lawn mower (100)comprising:
a body (1);
a rotatable cutting element (2), disposed on the body (1);
a driving assembly (6), disposed on the body and configured to drive the cutting element (2) to operate to perform a working task;
a battery pack accommodating cavity (51), provided on the body (1) and provided with a battery cover (10) capable of being opened or closed, wherein the battery pack accommodating cavity (51) is configured for insertion of a battery pack (7) to provide electric energy to the driving assembly (6), and the battery pack accommodating cavity (51) is provided with conductive electrode sheets (53) protruding from a surface of the battery pack accommodating cavity (51) and configured for insertion and engagement with the battery pack (7), wherein
the battery pack comprises: a housing (71); a circuit assembly accommodated in the housing; and a battery core assembly configured to perform charging and discharging, the circuit assembly comprising a connection terminal electrically connected to the battery core assembly, the housing being provided with a power supply port (72) for insertion of the conductive electrode sheet to be electrically connected to the connection terminal, and the circuit assembly being configured to electrically connect the battery pack mounted in the battery pack accommodating cavity (51) and the driving assembly (6),
**characterized in that**:
the electric lawn mower (100) is capable of being detachably connected to at least two battery packs;
when a conductive electrode sheet in the battery pack accommodating cavity (53) is connected to one battery pack of the at least two battery packs and another battery pack of the at least two battery packs is not connected to a conductive electrode sheet so that there is a conductive electrode sheet (53) in an unconnected state, the conductive electrode sheet (53) in an unconnected state is electrified; and
the electric lawn mower further comprises a shielding mechanism (52), disposed in the battery pack accommodating cavity and being movable relative to the conductive electrode sheet (53), wherein the shielding mechanism has a protection state of shielding the conductive electrode sheet (53) and a working state of releasing shielding of the conductive electrode sheet (53) to expose the conductive electrode sheet (53) for insertion and engagement with the power supply port (72), and an elastic member (9), configured to apply a restoring force to the shielding mechanism (52), to provide the shielding mechanism (52) with a tendency of moving toward the protection state or maintaining the protection state.

2. The electric lawn mower according to claim 1, wherein the shielding mechanism (52) is provided with an opening (5211) corresponding to the conductive electrode sheet; when the shielding mechanism is in the protection state, the conductive electrode sheet (53) is accommodated in the shielding mechanism; and when the shielding mechanism (52) is in the working state, the conductive electrode sheet (53) is electrically connected to the battery pack through the opening (5211).

3. The electric lawn mower according to claim 1, wherein a plurality of conductive electrode sheets (53) disposed in the battery pack accommodating cavity (51) are fixed on an electrode holder (58), a support member (59) is disposed between an inner wall of the battery pack accommodating cavity (51) and the electrode holder (58), a displacement direction of the shielding mechanism (52) is consistent with an insertion direction of the battery pack (7), and in the insertion direction of the battery pack (7), one end of the elastic member (9) forward abuts against the support member (59) and the other end backward abuts against the shielding mechanism (52).

4. The electric lawn mower according to claim 3, wherein the support member (59) and the body (1) are configured to be made of different materials, and the support member (59) is configured to be made of a flame retardant material.

5. The electric lawn mower according to claim 3, wherein the support member (59) is provided with a guiding portion (591) for guiding movement of the shielding mechanism (52).

6. The electric lawn mower according to claim 5, wherein a surface of the support member (59) facing away from the inner wall of the battery pack accommodating cavity (51) protrudes outward to form the guiding portion (591), and the electrode holder (58) is disposed on the guiding portion (591); and the guiding portion (591) and the electrode holder are both spaced apart from the inner wall of the battery pack accommodating cavity (51) to define guiding ring cavities (593), and end portions of the shielding mechanism are movably inserted into the guiding ring cavities (593).

7. The electric lawn mower according to claim 1, wherein when the shielding mechanism (52) is in the protection state, an initial elastic force applied by the elastic member to the shielding mechanism is between 20 N and 40 N.

8. The electric lawn mower according to claim 1, wherein when the shielding mechanism (52) is in the working state, the elastic member (9) deforms and is compressed to store energy, so that a reaction elastic force applied to the shielding mechanism (52) is not less than a sum of a weight of the battery pack and a weight of the shielding mechanism (52).

9. The electric lawn mower according to claim 1, wherein the shielding mechanism (52) is movable relative to the conductive electrode sheet (53) in a direction perpendicular to an insertion direction of the battery pack (7); or the shielding mechanism (52) is rotatable relative to the conductive electrode sheet (53) in a direction perpendicular to an insertion direction of the battery pack (7).

## Patentansprüche

1. Elektrischer Rasenmäher (100), der Folgendes umfasst:
einen Körper (1);
ein drehbares Schneidelement (2), das an dem Körper (1) angeordnet ist;
eine Antriebsanordnung (6), die an dem Körper angeordnet und dazu ausgelegt ist, das Schneidelement (2) anzutreiben, um es zu betreiben, um eine Arbeitsaufgabe durchzuführen;
einen Batteriepackaufnahmehohlraum (51), der an dem Körper (1) bereitgestellt und mit einer Batterieabdeckung (10) versehen ist, die geöffnet oder geschlossen werden kann, wobei der Batteriepackaufnahmehohlraum (51) zum Einführen eines Batteriepacks (7) ausgelegt ist, um der Antriebsanordnung (6) elektrische Energie bereitzustellen, und wobei der Batteriepackaufnahmehohlraum (51) mit leitfähigen Elektrodenplatten (53) versehen ist, die von einer Oberfläche des Batteriepackaufnahmehohlraums (51) vorstehen und zum Einführen und Eingreifen mit dem Batteriepack (7) ausgelegt sind, wobei
das Batteriepack Folgendes umfasst: ein Gehäuse (71); eine Schaltungsanordnung, die in dem Gehäuse aufgenommen ist; und eine Batteriekernanordnung, die dazu ausgelegt ist, ein Laden und Entladen durchzuführen, wobei die Schaltungsanordnung einen Verbindungsanschluss umfasst, der elektrisch mit der Batteriekernanordnung verbunden ist, wobei das Gehäuse mit einem Leistungsversorgungsanschluss (72) zum Einführen der leitfähigen Elektrodenplatte versehen ist, die elektrisch mit dem Verbindungsanschluss zu verbinden ist, und wobei die Schaltungsanordnung dazu ausgelegt ist, das in dem Batteriepackaufnahmehohlraum (51) montierte Batteriepack und die Antriebsanordnung (6) elektrisch zu verbinden,
**dadurch gekennzeichnet, dass**:
der elektrische Rasenmäher (100) lösbar mit mindestens zwei Batteriepacks verbunden werden kann;
wenn eine leitfähige Elektrodenplatte in dem Batteriepackaufnahmehohlraum (53) mit einem Batteriepack der mindestens zwei Batteriepacks verbunden ist und ein anderes Batteriepack der mindestens zwei Batteriepacks nicht mit einer leitfähigen Elektrodenplatte verbunden ist, so dass eine leitfähige Elektrodenplatte (53) vorhanden ist, die sich in einem nicht verbundenen Zustand befindet, die leitfähige Elektrodenplatte (53) in einem nicht verbundenen Zustand elektrifiziert wird;
und
der elektrische Rasenmäher ferner einen Abschirmmechanismus (52), der in dem Batteriepackaufnahmehohlraum angeordnet und relativ zu der leitfähigen Elektrodenplatte (53) beweglich ist, wobei der Abschirmmechanismus einen Schutzzustand zum Abschirmen der leitfähigen Elektrodenplatte (53) und einen Arbeitszustand zum Freigeben einer Abschirmung der leitfähigen Elektrodenplatte (53) aufweist, um die leitfähige Elektrodenplatte (53) zum Einführen und Eingreifen mit dem Leistungsversorgungsanschluss (72) freizulegen, und ein elastisches Element (9) umfasst, das dazu ausgelegt ist, eine Rückstellkraft auf den Abschirmmechanismus (52) auszuüben, um dem Abschirmmechanismus (52) eine Tendenz eines Bewegens zu dem Schutzzustand hin oder eines Aufrechterhaltens des Schutzzustands zu verleihen.

2. Elektrischer Rasenmäher nach Anspruch 1, wobei der Abschirmmechanismus (52) mit einer Öffnung (5211) versehen ist, die der leitfähigen Elektrodenplatte entspricht; wobei, wenn sich der Abschirmmechanismus in dem Schutzzustand befindet, die leitfähige Elektrodenplatte (53) in dem Abschirmmechanismus aufgenommen ist; und wenn sich der Abschirmmechanismus (52) in dem Arbeitszustand befindet, die leitfähige Elektrodenplatte (53) durch die Öffnung (5211) elektrisch mit dem Batteriepack verbunden ist.

3. Elektrischer Rasenmäher nach Anspruch 1, wobei mehrere leitfähige Elektrodenplatten (53), die in dem Batteriepackaufnahmehohlraum (51) angeordnet sind, an einem Elektrodenhalter (58) befestigt sind, wobei ein Stützelement (59) zwischen einer Innenwand des Batteriepackaufnahmehohlraums (51) und dem Elektrodenhalter (58) angeordnet ist, wobei eine Verschieberichtung des Abschirmmechanismus (52) mit einer Einführrichtung des Batteriepacks (7) übereinstimmt, und wobei in der Einführrichtung des Batteriepacks (7) ein Ende des elastischen Elements (9) vorne an dem Stützelement (59) anliegt und das andere Ende hinten an dem Abschirmmechanismus (52) anliegt.

4. Elektrischer Rasenmäher nach Anspruch 3, wobei das Stützelement (59) und der Körper (1) dazu ausgelegt sind, aus unterschiedlichen Materialien hergestellt zu sein, und das Stützelement (59) dazu ausgelegt ist, aus einem flammhemmenden Material hergestellt zu sein.

5. Elektrischer Rasenmäher nach Anspruch 3, wobei das Stützelement (59) mit einem Führungsabschnitt (591) zum Führen einer Bewegung des Abschirmmechanismus (52) versehen ist.

6. Elektrischer Rasenmäher nach Anspruch 5, wobei eine Oberfläche des Stützelements (59), die von der Innenwand des Batteriepackaufnahmehohlraums (51) abgewandt ist, nach außen vorsteht, um den Führungsabschnitt (591) zu bilden, und wobei der Elektrodenhalter (58) an dem Führungsabschnitt (591) angeordnet ist; und wobei der Führungsabschnitt (591) und der Elektrodenhalter beide von der Innenwand des Batteriepackaufnahmehohlraums (51) beabstandet sind, um Führungsringhohlräume (593) zu definieren, und wobei Endabschnitte des Abschirmmechanismus beweglich in die Führungsringhohlräume (593) eingeführt sind.

7. Elektrischer Rasenmäher nach Anspruch 1, wobei, wenn sich der Abschirmmechanismus (52) in dem Schutzzustand befindet, eine anfängliche elastische Kraft, die durch das elastische Element auf den Abschirmmechanismus ausgeübt wird, zwischen 20 N und 40 N liegt.

8. Elektrischer Rasenmäher nach Anspruch 1, wobei, wenn sich der Abschirmmechanismus (52) in dem Arbeitszustand befindet, sich das elastische Element (9) verformt und komprimiert wird, um Energie zu speichern, so dass eine elastische Reaktionskraft, die auf den Abschirmmechanismus (52) ausgeübt wird, nicht kleiner als eine Summe aus einem Gewicht des Batteriepacks und einem Gewicht des Abschirmmechanismus (52) ist.

9. Elektrischer Rasenmäher nach Anspruch 1, wobei der Abschirmmechanismus (52) relativ zu der leitfähigen Elektrodenplatte (53) in einer Richtung senkrecht zu einer Einführrichtung des Batteriepacks (7) beweglich ist; oder wobei der Abschirmmechanismus (52) relativ zu der leitfähigen Elektrodenplatte (53) in einer Richtung senkrecht zu einer Einführrichtung des Batteriepacks (7) drehbar ist.

## Revendications

1. Tondeuse à gazon électrique (100), comprenant :
un corps (1) ;
un rotatif élément de coupe (2), disposé sur le corps (1) ;
un ensemble d'entraînement (6), disposé sur le corps et configuré pour entraîner l'élément de coupe (2) pour qu'il fonctionne afin de réaliser une tâche de travail ; une cavité de logement de bloc batterie (51), prévue sur le corps (1) et pourvue d'un couvercle de batterie (10) capable d'être ouvert ou fermé, dans laquelle la cavité de logement de bloc batterie (51) est configurée pour l'insertion d'un bloc batterie (7) pour fournir de l'énergie électrique à l'ensemble d'entraînement (6), et la cavité de logement de bloc batterie (51) est pourvue de feuilles électrodes conductrices (53) faisant saillie à partir d'une surface de la cavité de logement de bloc batterie (51) et configurée pour l'insertion du bloc batterie (7) et l'entrée en prise avec celui-ci, dans laquelle
le bloc batterie comprend : un boîtier (71) ; un ensemble circuit logé dans le boîtier ; et un ensemble noyau de batterie configuré pour réaliser la charge et la décharge, l'ensemble circuit comprenant une borne de connexion connectée électriquement à l'ensemble noyau de batterie, le boîtier étant pourvu d'un port d'alimentation électrique (72) pour l'insertion de la feuille électrode conductrice destinée à être connectée électriquement à la borne de connexion, et l'ensemble circuit étant configuré pour connecter électriquement le bloc batterie monté dans la cavité de logement de bloc batterie (51) et l'ensemble d'entraînement (6),
**caractérisée en ce que** :
la tondeuse à gazon électrique (100) peut être connectée de façon amovible à au moins deux blocs batteries ;
lorsqu'une feuille électrode conductrice dans la cavité de logement de bloc batterie (53) est connectée à un bloc batterie des au moins deux blocs batteries et un autre bloc batterie des au moins deux blocs batteries n'est pas connectée à une feuille électrode conductrice de telle sorte qu'il y a une feuille électrode conductrice (53) dans un état non connecté, la feuille électrode conductrice (53) dans un état non connecté est électrifiée ; et
la tondeuse à gazon électrique comprend en outre un mécanisme bouclier (52), disposé dans la cavité de logement de bloc batterie et mobile relativement à la feuille électrode conductrice (53), dans laquelle le mécanisme bouclier a un état de protection effectuant un bouclier pour la feuille électrode conductrice (53) et un état de travail effectuant la libération du bouclier de la feuille électrode conductrice (53) pour exposer la feuille électrode conductrice (53) pour l'insertion et l'entrée en prise avec le port d'alimentation électrique (72), et un organe élastique (9), configuré pour appliquer une force de rappel sur le mécanisme bouclier (52), pour que le mécanisme bouclier (52) ait tendance à se mouvoir vers l'état de protection ou à maintenir l'état de protection.

2. Tondeuse à gazon électrique selon la revendication 1, dans laquelle le mécanisme bouclier (52) est pourvu d'une ouverture (5211) correspondant à la feuille électrode conductrice ; lorsque le mécanisme bouclier est dans l'état de protection, la feuille électrode conductrice (53) est logée dans le mécanisme bouclier ; et lorsque le mécanisme bouclier (52) est dans l'état de travail, la feuille électrode conductrice (53) est connectée électriquement au bloc batterie par l'intermédiaire de l'ouverture (5211).

3. Tondeuse à gazon électrique selon la revendication 1, dans laquelle une pluralité de feuilles électrodes conductrices (53) disposées dans la cavité de logement de bloc batterie (51) sont fixées sur un porte-électrode (58), un organe de support (59) est disposé entre une paroi intérieure de la cavité de logement de bloc batterie (51) et le porte-électrode (58), une direction de déplacement du mécanisme bouclier (52) coïncide avec une direction d'insertion du bloc batterie (7), et, dans la direction d'insertion du bloc batterie (7), une extrémité de l'organe élastique (9) vient en butée vers l'avant contre l'organe de support (59) et l'autre extrémité vient en butée vers l'arrière contre le mécanisme bouclier (52).

4. Tondeuse à gazon électrique selon la revendication 3, dans laquelle l'organe de support (59) et le corps (1) sont configurés pour être faits de matériaux différents, et l'organe de support (59) est configuré pour être fait d'un matériau ignifuge.

5. Tondeuse à gazon électrique selon la revendication 3, dans laquelle l'organe de support (59) est pourvu d'une partie de guidage (591) pour guider le mouvement du mécanisme bouclier (52).

6. Tondeuse à gazon électrique selon la revendication 5, dans laquelle une surface de l'organe de support (59) tournée à l'opposé de la paroi intérieure de la cavité de logement de bloc batterie (51) fait saillie vers l'extérieur pour former la partie de guidage (591), et le porte-électrode (58) est disposé sur la partie de guidage (591) ; et la partie de guidage (591) et le porte-électrode sont tous les deux espacés de la paroi intérieure de la cavité de logement de bloc batterie (51) pour définir des cavités annulaires de guidage (593), et des parties d'extrémité du mécanisme bouclier sont insérées de façon mobile dans les cavités annulaires de guidage (593).

7. Tondeuse à gazon électrique selon la revendication 1, dans laquelle, lorsque le mécanisme bouclier (52) est dans l'état de protection, une force élastique initiale appliquée par l'organe élastique sur le mécanisme bouclier est entre 20 N et 40 N.

8. Tondeuse à gazon électrique selon la revendication 1, dans laquelle, lorsque le mécanisme bouclier (52) est dans l'état de travail, l'organe élastique (9) se déforme et est comprimé pour stocker de l'énergie, de telle sorte qu'une force élastique de réaction appliquée sur le mécanisme bouclier (52) n'est pas inférieure à une somme d'un poids du bloc batterie et d'un poids du mécanisme bouclier (52).

9. Tondeuse à gazon électrique selon la revendication 1, dans laquelle le mécanisme bouclier (52) est mobile relativement à la feuille électrode conductrice (53) dans une direction perpendiculaire à une direction d'insertion du bloc batterie (7) ; ou le mécanisme bouclier (52) est rotatif relativement à la feuille électrode conductrice (53) dans une direction perpendiculaire à une direction d'insertion du bloc batterie (7).
